(19) Europäisches Patentamt
European Patent Office
Office européen des brevets

(11) EP 3 816 207 A1

(12) EUROPEAN PATENT APPLICATION
published in accordance with Art. 153(4) EPC

(43) Date of publication:
05.05.2021 Bulletin 2021/18

(51) Int Cl.:
C08J 3/12 (2006.01)
C08L 27/12 (2006.01)
C08K 3/04 (2006.01)

(21) Application number: 19843426.8

(22) Date of filing: 25.07.2019

(86) International application number:
PCT/JP2019/029219

(87) International publication number:
WO 2020/026938 (06.02.2020 Gazette 2020/06)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 01.08.2018 JP 2018145019

(71) Applicant: Taiyo Nippon Sanso Corporation
Tokyo 142-8558 (JP)

(72) Inventors:
• KODA, Yasuhito
  Tokyo 142-8558 (JP)
• TAKADA, Katsunori
  Tokyo 142-8558 (JP)
• IGARASHI, Hiroshi
  Tokyo 142-8558 (JP)

(74) Representative: HGF
1 City Walk
Leeds LS11 9DX (GB)

(54) PRODUCTION METHOD FOR COMPOSITE RESIN PARTICLES, AND COMPOSITE RESIN PARTICLES

(57) An object of the present invention is to provide a production method for composite resin particles containing a fluororesin and a carbon nanomaterial and having excellent moldability while maintaining conductivity, the present invention provides a production method for composite resin particles containing a fluororesin and a carbon nanomaterial, comprising: a step of separating the fluororesin in the presence of a dispersion medium; a step of obtaining a dispersion containing the fluororesin, the carbon nanomaterial, and the dispersion medium by dispersing the fluororesin and the carbon nanomaterial in the dispersion medium; and a step of removing the dispersion medium by storing the dispersion in a drying container having a bottom surface, and drying the dispersion under conditions in which a dry area calculated by the following equation (1) is in a range of 20 ∼ 100 $[cm^2/g]$, Dry area = $(S/W_1)$ ... (1), wherein S is an area $[cm^2]$ of the bottom surface of the drying container, and $W_1$ is a mass [g] of the composite resin particles in the dispersion.

EP 3 816 207 A1

**Description**

TECHNICAL FIELD

The present invention relates to a production method for composite resin particles, and composite resin particles.

BACKGROUND ART

A technique for imparting conductivity to a resin material such as polytetrafluoroethylene has been known. As an example, composite resin particles containing a carbon material such as graphite and carbon nanotubes and a resin material are known (Patent Documents 1 and 2).

Patent Document 1 discloses a production method in which polytetrafluoroethylene aggregated powder, filler powder, and dry ice are simultaneously put into a separating and mixing machine, and these are separated and mixed. In examples disclosed in Patent Document 1, graphite is used as the filler powder.

Patent Document 2 discloses a method for obtaining composite resin particles by drying a composite resin particles dispersion containing resin material particles, carbon nanomaterials, a ketone solvent, and a dispersant.

However, in the production method disclosed in Patent Document 1, the carbon material and the resin material are composited by so-called dry mixing. Therefore, when a carbon nanomaterial such as carbon nanotube is used as the carbon material, it is difficult to composite the carbon nanomaterial with polytetrafluoroethylene by the production method disclosed in Patent Document 1. As a result, when the carbon nanomaterial is used in the production method disclosed in Patent Document 1, conductivity cannot be imparted to the resin material.

In the production method for composite resin particles disclosed in Patent Document 2, the composite resin particles obtained by drying are often aggregated, and the shape and the size of the aggregates of the composite resin particles tend to be nonuniform. Therefore, when producing an extruded molded product such as a conductive tube, it is necessary to separate the aggregates of the composite resin particles into fine powders to reduce the gaps between the powders in the state of being filled in the molding machine.

However, particles made of a fluororesin such as polytetrafluoroethylene produced by emulsion polymerization tend to become fibrous when subjected to shearing force during separating. Even when the fluororesin particles are sieved and separated, they become fibrous. Therefore, it is difficult to pulverize the composite resin particles into powder. Then, when the fluororesin particles become fibrous, the moldability inherent in the fluororesin may decrease. Furthermore, the conductivity imparted to the composite resin particles may decrease.

As disclosed above, in the conventional production method for composite resin particles, it is difficult to produce the composite resin particles having excellent moldability while maintaining conductivity.

PRIOR ART DOCUMENTS

PATENT DOCUMENTS

Patent Document 1 Japanese Unexamined Patent Application, First Publication No. 2015-151543
Patent Document 2 Japanese Unexamined Patent Application, First Publication No. 2015-030821

SUMMARY OF INVENTION

PROBLEM TO BE SOLVED BY THE INVENTION

An object of the present invention is to provide a production method for composite resin particles containing a fluororesin and a carbon nanomaterial and having excellent moldability while maintaining conductivity.

MEANS FOR SOLVING THE PROBLEM

In order to solve the problem, the present invention provides the following.

[1] A production method for composite resin particles containing a fluororesin and a carbon nanomaterial, comprising:

a step of separating the fluororesin in the presence of a dispersion medium (first dispersion medium);
a step of obtaining a dispersion containing the fluororesin, the carbon

nanomaterial, and the dispersion medium by dispersing the fluororesin and the carbon nanomaterial in the dispersion medium; and

a step of removing the dispersion medium by storing the dispersion in a drying container having a bottom surface, and drying the dispersion under conditions in which a dry area calculated by the following equation (1) is in a range of 20 ~ 100 [cm$^2$/g],

$$\text{Dry area} = (S/W_1) \ldots (1)$$

wherein S is an area [cm$^2$] of the bottom surface of the drying container, and $W_1$ is a mass [g] of the composite resin particles in the dispersion.

[2] The production method for composite resin particles according to [1], wherein, in the step of removing the dispersion medium, the drying container is shaken before drying the dispersion.

[3] The production method for composite resin particles according to [1] or [2], wherein a bulk density of the composite resin particles calculated by the following equation (2) is 300 [g/L] or more and less than 600 [g/L],

$$\text{Bulk density} = (W_2/V_1) \ldots (2)$$

wherein $W_2$ is a mass [g] of the composite resin particles required to fill a first measuring container having a volume of $V_1$ [L].

[4] The production method for composite resin particles according to any one of [1] to [3], wherein a porosity of the composite resin particles calculated by the following equation (3) is less than 0.6,

$$\text{Porosity} = (V_3/V_2) \ldots (3)$$

wherein $V_3$ is a volume [L] of liquid required to fill a second measuring container having a volume $V_2$ [L] with the composite resin particles filled.

[5] Composite resin particles containing a fluororesin and a carbon nanomaterial, wherein a bulk density calculated by the following equation (2) is 300 [g/L] or more and less than 600 [g/L].

$$\text{Bulk density} = (W_2/V_1) \ldots (2)$$

wherein $W_2$ is a mass [g] of the composite resin particles required to fill a first measuring container having a volume of $V_1$ [L].

[6] Composite resin particles according to [5], wherein a porosity calculated by the following equation (3) is less than 0.6,

$$\text{Porosity} = (V_3/V_2) \ldots (3)$$

wherein $V_3$ is a volume [L] of liquid required to fill a second measuring container having a volume $V_2$ [L] with the composite resin particles filled.

EFFECTS OF THE INVENTION

According to the present invention, it is possible to produce composite resin particles containing a fluororesin and a carbon nanomaterial and having excellent moldability while maintaining conductivity.

BRIEF DESCRIPTION OF DRAWINGS

FIG. 1 is a photograph showing the appearance of the powder of the composite resin particles of Example 2.

FIG. 2 is a photograph of a compression molding machine when the powder of the composite resin particles of Example 2 was charged.

FIG. 3 is a photograph showing the appearance of a compression molded product of the composite resin particles of Example 2.

FIG. 4 is a photograph showing the appearance of the composite resin particles of Comparative Example 2.

FIG. 5 is a photograph of a compression molding machine when the composite resin particles of Comparative Example 2 were charged.

FIG. 6 is a photograph showing the appearance of a compression molded product of the composite resin particles of Comparative Example 2.

FIG. 7 is a photograph showing the state after separating composite resin particles of Comparative Example 2 with a sieve.

DETAILED DESCRIPTION OF THE PREFERRED EMBODIMENTS

The meanings of the following terms in the present description are as follows.

"Average particle diameter" is a value measured using a particle diameter distribution meter, and is a mode diameter in a frequency distribution.

"Volume resistivity" is a value measured by the four-terminal method using a resistivity meter (for example, "Loresta GP" manufactured by Mitsubishi Chemical Analytech Co., Ltd.).

"~" means a numerical range in which the numerical values before and after it are included as the lower limit value and the upper limit value.

<Production method for composite resin particles>

Hereinafter, a production method for composite resin particles of one embodiment according to the present invention will be disclosed in detail. In the present embodiment, the composite resin particles contain a fluororesin and a carbon nanomaterial.

Specific examples of the fluororesin include polytetrafluoroethylene (PTFE), tetrafluoroethylene parfluoroalkyl vinyl ether copolymer (PFA), ethylene-tetrafluoroethylene copolymer (ETFE), 4-ethylene fluoride-6-propylene fluoride copolymer (FEP), and polyvinylidene difluoride (PVDF).

Among these, as the fluororesin, polytetrafluoroethylene is preferable, polytetrafluoroethylene obtained by emulsion polymerization is more preferable, and fine powder containing polytetrafluoroethylene obtained by emulsion polymerization is most preferable.

The fine powder is a powder containing polytetrafluoroethylene obtained by emulsion polymerization. As the fine powder, a synthetic powder may be used, or a commercially available product may also be used. Examples of commercially available fine powder products include PTFE fine powder grade F-104 (average particle diameter: about 500 $\mu$m, manufactured by Daikin Industries, Ltd.).

The method for synthesizing the fine powder is not particularly limited. For example, tetrafluoroethylene may be emulsion-polymerized using a stabilizer and an emulsifier, particles in the emulsion-polymerized reaction solution may be aggregated, and the resin particles may be dried to obtain fine powder.

The average particle diameter of the fluororesin used as a raw material is preferably about 400 - 500 $\mu$m from the viewpoint of workability during separating. When the average particle diameter of the fluororesin is about 400 ~ 500 $\mu$m, it is not necessary to give an excessive amount of energy to the fluororesin at the time of separating, and the composite resin particles are further excellent in moldability.

The carbon nanomaterials are materials having a carbon six-membered ring structure.

Specific examples of the carbon nanomaterials include carbon nanofibers, carbon nanohorns, carbon nanocoils, graphene, fullerenes, acetylene black, ketjeneblack, carbon black, and carbon fibers. Among these, carbon nanotubes are particularly preferable.

The average length of the carbon nanomaterial is not particularly limited. The average length of the carbon nanomaterial can be, for example, 10 ~ 600 $\mu$m. When the average length of the carbon nanomaterial is 10 $\mu$m or more, the conductivity of the composite resin particles is further excellent. When the average length of the carbon nanomaterial is 600 $\mu$m or less, the carbon nanomaterial tends to adhere uniformly to the fluororesin.

The average length of carbon nanomaterials can be measured, for example, by observation with a scanning electron microscope.

First, in the production method for composite resin particles of the present embodiment (hereinafter referred to as "present production method"), the fluororesin is separated in the presence of a first dispersion medium (separating step).

As the first dispersion medium, a ketone-based solvent is preferable. Specific examples of the ketone-based solvent include ethyl methyl ketone, acetone, diethyl ketone, methyl propyl ketone, and cyclohexanone. However, the ketone-based solvent is not limited to these examples.

Among these, as the ketone-based solvent, ethyl methyl ketone is preferable because the composite resin particles tend to have excellent conductivity and moldability.

When the fluororesin is separated in the presence of the first dispersion medium, it is preferable to separate the fluororesin such that an average particle diameter is $5 \sim 50 \mu m$.

When the fluororesin is separated such that the average particle diameter is 5 $\mu m$ or more, the specific surface area of the fluororesin does not increase too much, and the amount of the carbon nanomaterials relative to the amount of the fluororesin is less likely to be insufficient. Therefore, it becomes difficult to distribute a region where the carbon nanomaterial is adsorbed and a region where the carbon nanomaterial is not adsorbed on the surface of the fluororesin, and the conductivity of the composite resin particles is further improved.

When the fluororesin is separated such that the average particle diameter is 50 $\mu m$ or less, the surface irregularities of the fluororesin particles become large and the specific surface area increases. This facilitates the uniform adsorption of the carbon nanomaterials to the surface of the fluororesin, and facilitates the reduction of the amount of the aggregates generated in the carbon nanomaterials. As a result, the carbon nanomaterial can be uniformly adhered to the surface of the fluororesin, and the uniformity of the appearance of the composite resin particles molded product is further improved.

When the fluororesin is separated in the presence of the first dispersion medium, the temperature of the first dispersion medium is preferably 20°C or lower, and more preferably 10°C or lower. When the fluororesin is separated in the presence of the first dispersion medium, if the temperature of the first dispersion medium is 20°C or lower, the composite resin particles in which carbon nanomaterial is uniformly adhered to the fluororesin can be produced while maintaining the moldability and mechanical properties of the fluororesin. As a result, the composite resin particles are further excellent in moldability.

As a method for separating the fluororesin, a method capable of suppressing the shearing force applied to the fluororesin particles is preferable. Specific examples of the separating method include stirring using a stirrer, separating by ultrasonic waves, and separating by a separater such as a food processor. However, the separating method is not limited to these examples.

Next, in the present production method, the fluororesin and the carbon nanomaterial are dispersed in the first dispersion medium to obtain a dispersion containing the fluororesin, the carbon nanomaterial, and the dispersion medium (step of obtaining a dispersion).

In the present embodiment, the first dispersion medium containing the fluororesin separated in the presence of the first dispersion medium and the carbon nanomaterial may be mixed to disperse the carbon nanomaterial in the first dispersion medium.

As a method for dispersing the fluororesin and the carbon nanomaterial in the first dispersion medium, a method capable of suppressing the shearing force applied to the fluororesin particles is preferable. As a specific example, stirring using a stirrer is preferable.

When the fluororesin and the carbon nanomaterial are dispersed in the first dispersion medium, the temperature of the first dispersion medium is preferably 20°C or lower, and more preferably 10°C or lower. When the temperature of the first dispersion medium is 20°C or lower when dispersing, composite resin particles in which carbon nanomaterials are uniformly adhered to the fluororesin are easily produced while maintaining the moldability and mechanical properties of the fluororesin. As a result, the composite resin particles are further excellent in moldability.

By dispersing the fluororesin and the carbon nanomaterial in the first dispersion medium in this way, the fluororesin and the carbon nanomaterial are composited, and composite resin particles are generated in the first dispersion medium. In the composite resin particles after dispersion, the carbon nanomaterial is adhered and fixed in a dispersed state on at least a part of the surface of the fluororesin.

As a result, a first dispersion containing the fluororesin, the carbon nanomaterial, and the first dispersion medium is obtained. The first dispersion contains the composite resin particles and the first dispersion medium. Then, the composite resin particles are dispersed in the first dispersion medium.

When the fluororesin and the carbon nanomaterial are dispersed in the first dispersion medium, the amount of the carbon nanomaterial used is preferably $0.01 \sim 2\%$ by mass, and more preferably $0.01 \sim 0.5\%$ by mass with respect to the total 100% by mass of the fluororesin and the carbon nanomaterial.

When the amount of the carbon nanomaterial used is 0.01% by mass or more, the composite resin particles are further excellent in conductivity. When the amount of the carbon nanomaterial used is 2% by mass or less, the composite resin particles are further excellent in moldability and mechanical properties.

In the semiconductor field, it is strongly required to reduce dust generation of fillers and outgassing. When the amount of the carbon nanomaterial used is 0.5% by mass or less, the amount of the carbon nanomaterial used is small, so that the risk of contamination due to the carbon nanomaterial in the production process can be reduced.

When the fluororesin and the carbon nanomaterial are dispersed in the first dispersion medium, a dispersant may be used. Specific examples of the dispersant include an acrylic dispersant. However, the dispersant is not limited to an acrylic dispersant.

When the fluororesin and the carbon nanomaterial are dispersed in the first dispersion medium, a second dispersion may be used as the carbon nanomaterial. The second dispersion is a dispersion in which the carbon nanomaterial is dispersed in a second dispersion medium.

As a specific example of the second dispersion medium, a compound which is the same as the specific example of the first dispersion medium is exemplified. The second dispersion medium may be the same as or different from the first dispersion medium. However, as the second dispersion medium, it is preferable to use the same compound as the first dispersion medium because the composite resin particles tend to be excellent in conductivity and moldability.

When the second dispersion is used, the composite resin particles are dispersed in a mixed medium of the first dispersion medium and the second dispersion medium.

When the second dispersion is used, the amount of the carbon nanomaterial is preferably 0.01 ~ 2% by mass, and more preferably 0.01 ~ 1% by mass with respect to 100% by mass of the second dispersion. When the amount of the carbon nanomaterial is 0.01% by mass or more with respect to 100% by mass of the second dispersion, the composite resin particles are further excellent in conductivity. When the amount of the carbon nanomaterial is 2% by mass or less with respect to 100% by mass of the second dispersion, the composite resin particles are further excellent in moldability and mechanical properties.

Next, in the present production method, the first dispersion containing the fluororesin, the carbon nanomaterial, and the first dispersion medium is stored in a drying container, and the dispersion is dried under certain conditions to remove the dispersion medium (step of removing the dispersion medium).

First, the first dispersion containing the fluororesin, the carbon nanomaterial and the first dispersion medium is stored in the drying container. The drying container is a container having a bottom surface.

Then, in the present production method, the first dispersion is dried under the conditions in which the dry area is 20 ~ 100 cm$^2$/g, and the dispersion medium (the first dispersion medium, the second dispersion medium, or the mixture medium containing the first dispersion medium and the second dispersion medium) is removed. The dry area can be calculated by the following equation (1).

$$\text{Dry area} = (S/W_1) \ldots (1)$$

wherein S is an area [cm$^2$] of the bottom surface of the drying container, and $W_1$ is a mass [g] of the composite resin particles in the first dispersion.

In the present production method, the dry area is 20 ~ 100 cm$^2$/g, and preferably 50 ~ 100 cm$^2$/g. When the dry area is 20 cm$^2$/g or more, the composite resin particles become uniform particles, the bulk density of the composite resin particles is increased, and the moldability of the composite resin particles is improved. When the dry area is 100 cm$^2$/g or less, the workability at the time of drying is improved.

When drying the first dispersion, the first dispersion may be heated as long as the effect of the present invention is not impaired. However, when the first dispersion is dried, it is preferable to allow it to stand at room temperature and atmospheric pressure by natural drying.

The drying time is not particularly limited. For example, it can be 1 to 24 hours.

The pressure during drying is not particularly limited. For example, it can be 1 kPa to 0.2 MPa, and can be about atmospheric pressure.

It is preferable to shake the drying container before drying the first dispersion. Thereby, the thickness of the composite resin particles deposited on the bottom surface of the drying container becomes uniform, and the composite resin particles after drying tend to become uniform particles. As a result, the composite resin particles are further excellent in moldability.

When shaking, a shaking device such as a large shaker "Double Shaker NR-150" (manufactured by TIETECH Co., Ltd.) can be used.

The thickness (height from the bottom surface) of the composite resin particles deposited in the drying container is preferably 0.4 ~ 2 mm, more preferably 0.4 ~ 1 mm, and most preferably 0.4 ~ 0.8 mm.

The composite resin particles obtained by the present production method are preferably in the form of powder at room temperature.

The bulk density ($W_2$/V) of the composite resin particles obtained by the present production method is preferably 300 g/L or more and less than 600 g/L, and more preferably 300 ~ 500 g/L. When the bulk density ($W_2$/V) of the composite resin particles is 300 g/L or more and less than 600 g/L, it becomes easy to uniformly fill the composite resin particles in the extrusion molding machine. Here, the bulk density can be calculated by the following equation (2).

$$\text{Bulk density} = (W_2/ V_1) \ldots (2)$$

wherein $W_2$ is the mass [g] of the composite resin particles required to fill a first measuring container having a volume of $V_1$ [L]. $W_2$ [g] is the mass of the composite resin particles in dry state.

The porosity of the composite resin particles obtained by the present production method is preferably 0.4 or more and less than 0.6, more preferably 0.4 ~ 0.55, and most preferably 0.4 ~ 0.5. When the porosity is less than 0.6, the coarse density of the compression molded product of the composite resin particles is improved, so that it is easy to suppress a decrease in the volume resistivity of the molded product. Here, the porosity can be calculated by the following equation (3).

$$\text{Porosity} = (V_3/V_2) \ldots (3)$$

wherein $V_3$ is a volume [L] of liquid required to fill a second measuring container having a volume $V_2$ [L] with the composite resin particles filled.

$V_3$ [L] is the volume [L] of the gaps between the composite resin particles generated when the composite resin particles are filled in the second measuring container. For example, $V_3$ [L] can be calculated by adding a standard liquid having a known density [g/L] into the second measuring container filled with composite resin particles, filling the gaps between the composite resin particles with the standard liquid, and measuring the mass [g] of the standard liquid required to fill the inside of the second measuring container.

(Effects)

According to the present production method explained above, it is easy to control the bulk density of the composite resin particles. Further, according to the present production method, the porosity of the composite resin particles when filled in a container such as a molding machine can be controlled to be relatively small.

Therefore, the composite resin particles can be uniformly filled in the compression molding machine. As a result, the composite resin particles are stably supplied in the extrusion molding machine, the unevenness of the extrusion amount is reduced, and the moldability is improved.

In the present production method, as the fluororesin is separated in the presence of the first dispersion medium, the fluororesin and the carbon nanomaterial are composited by wet mixing, so that the carbon nanomaterial is easily adsorbed on the surface of the fluororesin. As a result, the conductivity of the composite resin particles is improved.

As disclosed above, according to the present production method, the bulk density and particle diameter of the composite resin particles can be controlled when the first dispersion is dried without secondary processing of the composite resin particles after drying. Therefore, it is possible to produce the composite resin particles having a bulk density equivalent to that of the fluororesin used as a raw material. According to the present production method, the amount of the aggregates generated in the composite resin particles is also reduced, and it is not necessary to separate the composite resin particles. Therefore, composite resin particles with a small average particle diameter can be obtained without fiberizing the fluororesin.

Then, the composite resin particles having a bulk density equivalent to that of the fluororesin as a raw material can be produced, and the porosity of the composite resin particles when filled in a container such as a molding machine can be reduced. Therefore, when a molded product such as a tube is produced by extrusion molding using the composite resin particles, the appearance of the molded product becomes uniform.

<Composite resin particles>

The composite resin particles of the present invention contain the fluororesin and the carbon nanomaterial. In the composite resin particles, the carbon nanomaterial is adhered and fixed in a dispersed state on at least a part of the surface of the fluororesin. The composite resin particles of the present invention may contain components other than the fluororesin and the carbon nanomaterial (for example, a dispersant) as long as the effects of the present invention are not impaired.

The details, specific examples, and preferred embodiments of the fluororesin used are the same as those disclosed in the present production method disclosed above.

The details, specific examples, and preferred embodiments of the carbon nanomaterial used are also the same as those disclosed in the present production method disclosed above.

The bulk density of the composite resin particles of the present invention is 300 g/L or more and less than 600 g/L, and preferably 300 ~ 500 g/L. Here, the bulk density can be calculated by the following equation (2).

$$\text{Bulk density} = (W_2/ V_1) \dots (2)$$

wherein $W_2$ is the mass [g] of the composite resin particles required to fill a first measuring container having a volume of $V_1$ [L].

The porosity of the composite resin particles of the present invention is preferably less than 0.6, more preferably 0.4 or more and less than 0.6, further preferably 0.4 ~ 0.55, and particularly preferably 0.4 ~ 0.5. When the porosity ($V_3/V_2$) is less than 0.6, the coarse density of the compression molded product of the composite resin particles is improved, so that it is easy to suppress a decrease in the volume resistivity of the molded product. Here, the porosity can be calculated by the following equation (3).

$$\text{Porosity} = (V_3/V_2) \dots (3)$$

wherein $V_3$ is a volume [L] of liquid required to fill a second measuring container having a volume $V_2$ [L] with the composite resin particles filled.

$V_3$ [L] is the volume [L] of the gaps between the composite resin particles generated when the composite resin particles are filled in the second measuring container. For example, $V_3$ [L] can be calculated by adding a standard liquid having a known density [g/L] into the second measuring container filled with the composite resin particles, filling the gaps between the composite resin particles with the standard liquid, and measuring the mass [g] of the standard liquid required to fill the inside of the second measuring container.

(Effects)

Since the composite resin particles of the present invention have a bulk density of 300 g/L or more and less than 600 g/L, they can be uniformly filled in a compression molding machine. As a result, the composite resin particles are stably supplied in the extrusion molding machine, the unevenness of the extrusion amount is reduced, and the moldability is improved.

<Example>

Hereinafter, the present invention will be specifically disclosed with reference to Examples, but the present invention is not limited to the following Examples.

(Bulk density)

The bulk density was calculated by the following equation (2).

$$\text{Bulk density} = (W_2/ V_1) \dots (2)$$

In the equation (2), $V_1$ is the volume [L] of the first measuring container. A sample (composite resin particles) was filled in the first measuring container, and the mass [g] of the sample required for filling was measured and used as $W_2$.

(Porosity)

The porosity was calculated by the following equation (3).

$$\text{Porosity} = (V_3/V_2) \dots (3)$$

In the equation (3), $V_2$ is the volume [L] of the second measuring container. The sample (composite resin particles) was filled in the second measuring container, and the volume [L] of the gaps generated between the sample particles was calculated and used as $V_3$.

Specifically, $V_3$ [L] was calculated by adding a standard liquid having a known density into the second measuring container filled with the sample particles, filling the gaps between the sample particles with the standard liquid, and measuring the mass [g] of the standard liquid required to fill the inside of the second measuring container, and using the known density [g/L] of the standard liquid.

(Volume resistivity)

A compression molded product ($\varphi$30 mm $\times$ t3 mm) of the composite resin particles was prepared and used as a sample. The volume resistivity of the sample was measured using a resistivity meter ("Loresta GP" manufactured by Mitsubishi Chemical Analytech Co., Ltd.) in accordance with JIS K7194.

(Sieve passage percentage)

The composite resin particles were sieved with a mesh opening of 1.7 mm, the mass of the composite resin particles that have passed through the sieve was measured, and the sieve passage percentage was calculated by the following equation (2).

$$\text{Sieve passage percentage} = 100 \text{ x (mass of the composite resin particles that}$$

$$\text{have passed through the sieve) / (total mass of the composite resin particles that have}$$

$$\text{been sieved) ... (2)}$$

(Example 1)

First, 5 g of PTFE fine powder grade F-104 (average particle diameter: about 500 $\mu$m, manufactured by Daikin Industries, Ltd., hereinafter referred to as "PTFE fine powder"), 20 g of ethyl methyl ketone were put into a 100 mL beaker, and the beaker was cooled to maintain the temperature of the liquid in the beaker below 20°C. Next, a stirrer was placed in the beaker and the liquid in the beaker was stirred. Then, an ultrasonic irradiator was placed in the beaker and the mixture was further stirred using ultrasonic waves to separate the PTFE fine powder in the presence of ethyl methyl ketone.

Next, as the second dispersion, a CNT dispersion containing carbon nanotubes (average length: 100 ~ 400 $\mu$m) and ethyl methyl ketone was prepared. The amount of the carbon nanotubes in the CNT dispersion was adjusted to 0.2% by mass. 7.5 g of the CNT dispersion was placed into a beaker, and the inside of the beaker was stirred with a stirrer while maintaining the temperature of the liquid in the beaker below 20°C to disperse the separated PTFE fine powder and the carbon nanotubes in ethyl methyl ketone.

Next, the dispersion of the stirred composite resin particles was stored in a drying container so that the mass of the composite resin particles was 1 g, and the container was shaken so that the thickness of the resin deposited on the bottom surface of the drying container was uniform. Here, a drying container having a bottom surface area of 20 cm$^2$ was used, and when shaking, a large shaker "Double Shaker NR-150" (manufactured by TIETECH Co., Ltd.) was used as a shaking device. The thickness of the layer of the composite resin particles in the drying container was 1 ~ 2 mm.

The dispersion of the composite resin particles was air-dried in the drying container under the conditions of 20°C, atmospheric pressure for 3 hours to produce powder of the composite resin particles of Example 1. The sieve passage percentage, the bulk density, and the porosity of the composite resin particles of Example 1 were measured. Next, the powder of the composite resin particles of Example 1 was put into a compression molding machine to produce a compression molded product of Example 1 under the conditions of 20°C and 40 MPa. The volume resistivity of the compressed molded product of Example 1 was measured. The results are shown in Table 1.

(Examples 2 and 3 and Comparative Example 1)

The composite resin particles and the compression molded products of Examples 2 and 3 and Comparative Example 1 were produced in the same manner as in Example 1 except that the area of the bottom surface of the drying container was changed to the values in Table 1. During drying, the thickness of the layer of the composite resin particles in the drying container was recorded.

The sieve passage percentage, the bulk density, and the porosity of the composite resin particles, and the volume resistivity of the compressed molded product in Examples 2 and 3 and Comparative Example 1 were measured. The results are shown in Table 1.

(Comparative Example 2)

As shown in Patent Document 2, a dispersion of the composite resin particles was obtained by mixing the PTFE fine powder, the carbon nanotubes, the ketone solvent, and the dispersant. Next, the dispersion of the composite resin particles was dried to produce the composite resin particles of Comparative Example 2. Next, the composite resin particles of Comparative Example 2 were put into a compression molding machine to produce a compression molded product of Comparative Example 2 under the conditions of 20°C and atmospheric pressure.

Table 1

|  | Example 1 | Example 2 | Example 3 | Comparative Example 1 |
|---|---|---|---|---|
| Dry area [cm$^2$/g] | 20 | 50 | 100 | 10 |
| Thickness of layer of composite resin particles in drying container [nm] | 1 ~ 2 | 0.4 ~ 1 | 0.4 ~ 0.8 | 2 ~ 5 |
| Sieve passage percentage [%] | 50 | 90 | 95 | 25 |
| Bulk density [g/L] | 400 ~ 600 | 300~500 | 300~500 | 600 ~ 800 |
| Porosity [-] | 0.45~0.5 | 0.4~0.45 | 0.4~0.45 | 0.6~0.65 |
| Volume resistivity of compression molded product [$\Omega \cdot$ cm] | 5~10 | 4~8 | 4~8 | 4~8 |

The composite resin particles of Examples 1 to 3 obtained by drying under conditions in which the dry area was 20 - 100 cm$^2$/g were all controlled in a bulk density of 300 g/L or more and less than 600 g/L. As disclosed above, the bulk density of the composite resin particles of Examples 1 to 3 was equivalent to the bulk density of the PTFE fine powder used as the raw material. From this result, it is predicted that the composite resin particles of Examples 1 to 3 are excellent in moldability.

All of the composite resin particles of Examples 1 to 3 had a porosity of less than 0.6. From this result, it is predicted that the composite resin particles of Examples 1 to 3 are excellent in moldability.

The sieve passage percentage of the composite resin particles of Examples 1 to 3 was 50% or more, and that of the composite resin particles of Examples 2 and 3 was 90% or more. On the other hand, the sieve passage percentage of the composite resin particles of Comparative Example 1 was 25%, and it was difficult to produce powdered composite resin particles.

The volume resistivity of the compression molded product of Examples 1 to 3 and Comparative Example 1 was 4 ~ 10 $\Omega \cdot$cm. From this result, it was found that the composite resin particles obtained by the production methods of Examples 1 to 3 retain the conductivity.

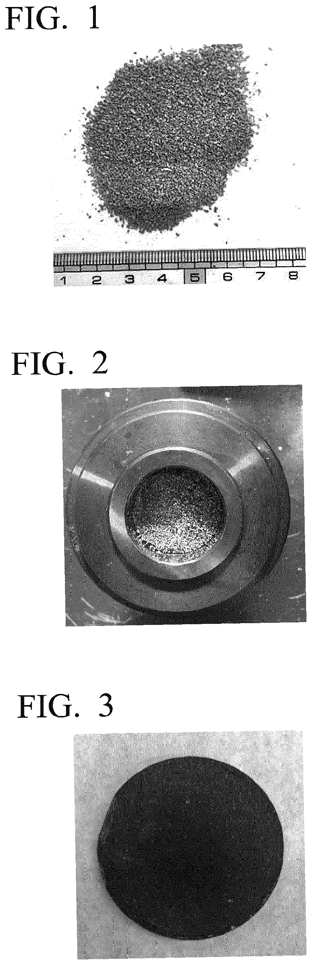

FIG. 1 is a photograph showing the appearance of the powder of the composite resin particles of Example 2. It is predicted that the composite resin particles of Example 2 are in the form of fine powder, have little variation in particle diameter, and a uniform particle diameter, and are excellent in moldability.

FIG. 2 is a photograph of a compression molding machine when the powder of the composite resin particles of Example 2 was charged. It is predicted that the composite resin particles of Example 2 are densely packed inside the compression molding machine, and the unevenness of the extrusion amount is reduced.

FIG. 3 is a photograph showing the appearance of the compression molded product of the composite resin particles of Example 2. The appearance of the compression molded product of the composite resin particles of Example 2 was uniform.

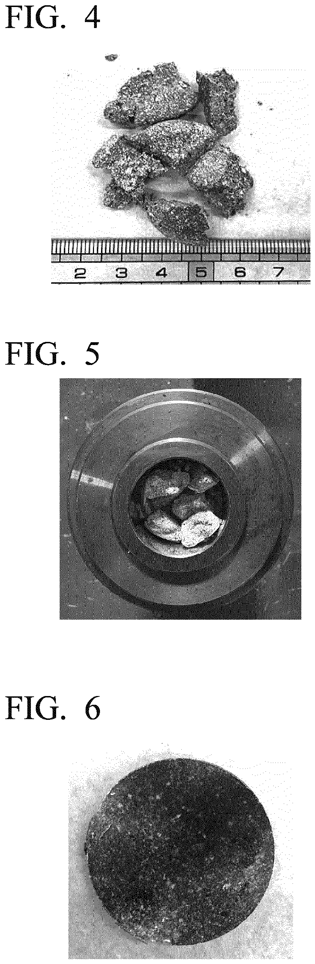

FIG. 4 is a photograph showing the appearance of the composite resin particles of Comparative Example 2. The composite resin particles of Comparative Example 2 were obtained as aggregates of the composite resin particles, and contained a lump of aggregate resin particles. Therefore, in order to obtain a compression molded product having a uniform appearance, it may be necessary to separate the massive composite resin particles.

FIG. 5 is a photograph of the compression molding machine when the composite resin particles of Comparative Example 2 were charged. It is predicted that the composite resin particles of Comparative Example 2 are not densely filled inside the compression molding machine, and the extrusion amount is uneven. Therefore, in order to reduce the unevenness of the extrusion amount, it is considered necessary to finely separate the massive composite resin particles.

FIG. 6 is a photograph showing the appearance of the compression molded product of the composite resin particles of Comparative Example 2. The appearance of the compressed molded product of the composite resin particles of Comparative Example 2 was not uniform, and aggregate spots of the carbon nanotubes and aggregate spots of the PTFE fine powder were observed, and there were many irregularities.

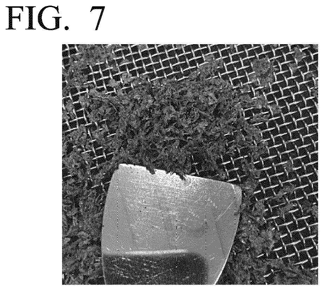

FIG. 7 is a photograph showing the state after separating the composite resin particles of Comparative Example 2 with the sieve. As shown in FIG. 4, the composite resin particles of Comparative Example 2 were aggregates of the composite resin particles. As shown in FIG. 7, when the aggregates of the massive composite resin particles were separated with the sieve, the composite resin particles became fibrous. The fibrous composite resin particles could not be applied to the production of compression molded products.

As disclosed above, it was confirmed that the composite resin particles of Examples 1 to 3 were excellent in conductivity, and it was suggested that the composite resin particles of Examples 1 to 3 are excellent in moldability.

**Claims**

1. A production method for composite resin particles containing a fluororesin and a carbon nanomaterial, comprising:

   a step of separating the fluororesin in the presence of a dispersion medium;
   a step of obtaining a dispersion containing the fluororesin, the carbon nanomaterial, and the dispersion medium by dispersing the fluororesin and the carbon nanomaterial in the dispersion medium; and
   a step of removing the dispersion medium by storing the dispersion in a drying container having a bottom surface, and drying the dispersion under conditions in which a dry area calculated by the following equation (1) is in a range of 20 ~ 100 [cm$^2$/g],

$$\text{Dry area} = (S/W_1) \ ... \ (1)$$

   wherein S is an area [cm$^2$] of the bottom surface of the drying container, and $W_1$ is a mass [g] of the composite resin particles in the dispersion.

2. The production method for composite resin particles according to Claim 1, wherein, in the step of removing the dispersion medium, the drying container is shaken before drying the dispersion.

3. The production method for composite resin particles according to Claim 1 or 2, wherein a bulk density of the composite resin particles calculated by the following equation (2) is 300 [g/L] or more and less than 600 [g/L],

$$\text{Bulk density} = (W_2/ \ V_1) \ ... \ (2)$$

   wherein $W_2$ is a mass [g] of the composite resin particles required to fill a first measuring container having a volume of $V_1$ [L].

4. The production method for composite resin particles according to any one of Claims 1 to 3, wherein a porosity of the composite resin particles calculated by the following equation (3) is less than 0.6,

$$\text{Porosity} = (V_3/V_2) \ ... \ (3)$$

   wherein $V_3$ is a volume [L] of liquid required to fill a second measuring container having a volume $V_2$ [L] with the composite resin particles filled.

5. Composite resin particles containing a fluororesin and a carbon nanomaterial, wherein a bulk density calculated by the following equation (2) is 300 [g/L] or more and less than 600 [g/L].

$$\text{Bulk density} = (W_2/ \ V_1) \ ... \ (2)$$

   wherein $W_2$ is a mass [g] of the composite resin particles required to fill a first measuring container having a volume of $V_1$ [L].

6. Composite resin particles according to Claim 5, wherein a porosity calculated by the following equation (3) is less

than 0.6,

$$\text{Porosity} = (V_3/V_2) \dots (3)$$

wherein $V_3$ is a volume [L] of liquid required to fill a second measuring container having a volume $V_2$ [L] with the composite resin particles filled.

# FIG. 1

# FIG. 2

# FIG. 3

EP 3 816 207 A1

FIG. 4

FIG. 5

FIG. 6

FIG. 7

## INTERNATIONAL SEARCH REPORT

| International application No. |
|---|
| PCT/JP2019/029219 |

**A.   CLASSIFICATION OF SUBJECT MATTER**
Int.Cl.  C08J3/12(2006.01)i, C08K3/04(2006.01)i, C08L27/12(2006.01)i

According to International Patent Classification (IPC) or to both national classification and IPC

**B.   FIELDS SEARCHED**

Minimum documentation searched (classification system followed by classification symbols)
Int.Cl.  C08J3/00-3/28, C08J99/00, C08L1/00-101/14, C08K3/00-13/08

Documentation searched other than minimum documentation to the extent that such documents are included in the fields searched
| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
|---|---|---|
| X<br>A | JP 2015-151543 A (SANKEI GIKEN CO., LTD.) 24 August 2015, claims, paragraphs [0035]-[0045], example 1 (Family: none) | 5<br>1-4, 6 |
| X<br>A | JP 2003-2979 A (DAIKIN INDUSTRIES, LTD.) 08 January 2003, claims, paragraph [0053], table 1, example 5 (Family: none) | 5<br>1-4, 6 |
| X<br>A | JP 2001-220482 A (DUPONT-MITSUI FLUOROCHEMICALS COMPANY, LTD.) 14 August 2001, table 1, comparative examples 1-3 (Family: none) | 5<br>1-4, 6 |

☒   Further documents are listed in the continuation of Box C.          ☐   See patent family annex.

| | |
|---|---|
| *          Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| 01 October 2019 (01.10.2019) | 21 October 2019 (21.10.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

| International application No. |
| --- |
| PCT/JP2019/029219 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | WO 2011/070813 A1 (TAIYO NIPPON SANSO CORPORATION) 16 June 2011, claims, examples & US 2012/0241692 A1, claims, examples & EP 2511322 A1& CN 102656216 A & TW 201120914 A | 1-6 |
| A | JP 2014-34591 A (TAIYO NIPPON SANSO CORPORATION) 24 February 2014, claims, examples (Family: none) | 1-6 |
| A | JP 2002-234945 A (ASAHI GLASS CO., LTD.) 23 August 2002, claims, examples & US 2002/0107320 A1 claims, examples & EP 1213321 A2 & CN 1357568 A | 1-6 |
| A | WO 97/11111 A1 (DAIKIN INDUSTRIES, LTD.) 27 March 1997, claims, examples & US 6197862 B1 claims, examples & EP 852245 A1 & CN 1196739 A & TW 353088 B | 1-6 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015151543 A
- JP 2015030821 A